Europäisches Patentamt

European Patent Office

Office européen des brevets

(19)

(11) Publication number: **0 074 172**
**B1**

(12) **EUROPEAN PATENT SPECIFICATION**

(45) Date of publication of patent specification: **24.06.87**

(51) Int. Cl.⁴: **A 01 D 90/00,** A 01 D 90/02

(21) Application number: **82303983.9**

(22) Date of filing: **28.07.82**

(54) **A loading vehicle for picking up and transporting crop material lying on the ground.**

(30) Priority: **20.08.81 DK 3688/81**

(43) Date of publication of application:
**16.03.83 Bulletin 83/11**

(45) Publication of the grant of the patent:
**24.06.87 Bulletin 87/26**

(84) Designated Contracting States:
**AT BE CH DE FR GB IT LI LU NL SE**

(56) References cited:
**AT-B- 239 705**
**AT-B- 254 769**
**CH-A- 465 950**
**CH-A- 486 190**
**DE-A-1 507 320**
**DE-B-1 124 288**
**DE-B-1 220 658**
**DE-B-1 757 538**

(73) Proprietor: **MASKINFABRIKEN TAARUP A/S**
**DK-5300 Kerteminde (DK)**

(72) Inventor: **Larsen, Borge**
**Kystvej 29**
**DK-5300 Kerteminde (DK)**
Inventor: **Pedersen, Poul Kingo**
**Andekaert 67**
**DK-5300 Kerteminde (DK)**
Inventor: **Lauritzen, Georg**
**Heibergsvej 23**
**DK-5300 Kerteminde (DK)**

(74) Representative: **Orr, William McLean et al**
**Haseltine Lake & Co Hazlitt House 28**
**Southampton Buildings Chancery Lane**
**London WC2A 1AT (GB)**

## Description

This invention relates to a loading vehicle for picking-up and transporting crop material lying on the ground, comprising a container body for storing crop material picked-up by the vehicle, a rotary pick-up drum mounted at the front end of the body and having resilient pick-up fingers for engaging crop material lying on the ground and for feeding such picked-up material upwardly towards a rotary conveyor drum which is rotatable in the same direction as the pick-up drum and which is also mounted at the front of the body and has conveyor arms which convey the material fed to the conveyor drum by the pick-up drum via a conveyor duct to the interior of the body, the conveyor duct being defined partly by the conveyor drum and also by a guide surface which cooperates with the conveyor arms.

Loading vehicles of the above general type were originally developed for gathering cut long grass and hay, and are widely used, particularly on difficult ground. To make the vehicles useful also for picking up grass for ensilage, they were later provided with stationary knives in the conveyor duct for chopping the blades of grass.

A loading vehicle for picking-up and transporting crop material lying on the ground is known from AT—B—254 769, in which a rotary pick-up drum is mounted at the front end of a container body and has resilient pick-up fingers for engaging crop material lying on the ground and for feeding such picked-up material upwardly towards a rotary conveyor drum which is rotatable in the same direction as the pick-up drum and which is also mounted at the front of the body. The conveyor drum has conveyor arms which convey the material fed to the conveyor drum by the pick-up drum via a guide surface which cooperates with the conveyor arms. Also, it is stated that there is an abrupt change in the conveying direction of the crop material as it is transferred from the pick-up drum to the conveying drum. However, as will be apparent from the Figures of drawings of AT—B—254 769, the conveyor drum is not enclosed by any housing, but is completely exposed below the floor of the loading body. In addition, it will be noted that the pick-up drum is located forwardly of the conveyor drum. Therefore, when crop material is conveyed upwardly and rearwardly by the pick-up drum towards the conveyor drum, there will be substantially no enclosure of the crop material as it is engaged by the conveyor arms of the conveyor drum, and therefore there will be only a small degree of pre-compaction applied to the crop material as it is conveyed forwardly and upwardly towards the cooperating guide surface which directs the crop material into the interior of the loading body.

The present invention has been developed with a view to providing a loading vehicle having improved compaction of crop material which is supplied by the conveyor drum to the interior of the loading body.

According to the invention there is provided a loading vehicle for picking-up and transporting crop material lying on the ground, comprising a container body for storing crop material picked-up by the vehicle, a rotary pick-up drum mounted at the front end of the body and having resilient pick-up fingers, which cooperate with a guide surface, for engaging crop material lying on the ground and for feeding such picked-up material at least upwardly towards a rotary conveyor drum which is rotatable in the same direction as the pick-up drum and which is also mounted at the front of the body and has conveyor arms, arranged in axial or spirally extending rows on the drum, which convey the material fed to the conveyor drum by the pick-up drum via a conveyor duct to the interior of the body, said conveyor duct being defined partly by the conveyor drum and also by a first guide surface which cooperates with the conveyor arms;

characterised in that the pick-up drum is mounted on the body rearwardly of the conveyor drum and said guide surface which cooperates with the pick-up fingers, said guide surface being referred to hereinafter as a second guide surface which is arranged to guide upward movement of the crop material to an inlet opening for the conveyor drum;

in that the inlet opening is defined between the first guide surface and the second guide surface, and is arranged below the underside of the conveyor drum;

and in that the first guide surface extends away from the inlet opening so as to define a forward and upward path for the conveyor duct, whereby material fed to the inlet opening by the pick-up drum undergoes an abrupt change in direction and pre-compaction in an entry region of the conveyor duct, prior to passage along the conveyor duct by the conveyor arms.

Thus, during transfer of crop material from the pick-up drum to the conveyor drum, a damming-up effect is produced which causes the material to be distributed throughout the length of the front of the conveyor drum, or at least a major part of it, and also causes compaction of the material which increases the capacity of the conveyor drum and results in a better utilisation of the capacity of the vehicle.

Preferably, the pick-up drum is pivotally mounted below the body so as to be pivotable upwardly and rearwardly when a ground obstruction is encountered, in order to swing clear of such obstruction. Further, when the load vehicle is a towed vehicle, the distance between a tractor and the towed vehicle can be reduced to a greater extent than is possible with conventional loading vehicles.

Preferably, a knife is fitted at the inlet opening to the conveyor drum, the knife extending throughout the entire length of the drum and having a cutting edge which faces in the opposite direction to the one in which the conveyors pass the knife, whereby at least a part of the crop material will be cut when the conveyors transport the material past the knife.

The invention will now be described in detail

**0 074 172**

with reference to the accompanying drawings, in which:

Figure 1 is a side view of a first embodiment of loading vehicle according to the invention;

Figure 2 is a schematic and enlarged view of a pick-up drum of the vehicle;

Figure 3 is a view, similar to Figure 2, of a modified arrangement of pick-up drum; and

Figures 4 to 7 are schematic views of various types of vehicle body with various mechanisms for distributing and/unloading the crop material.

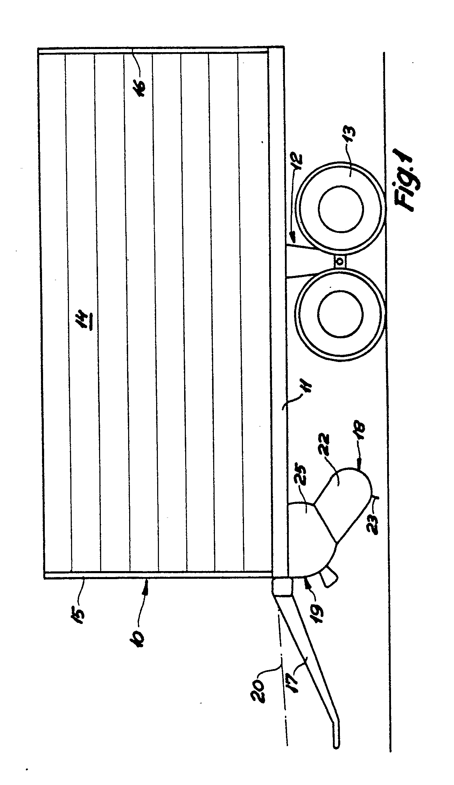

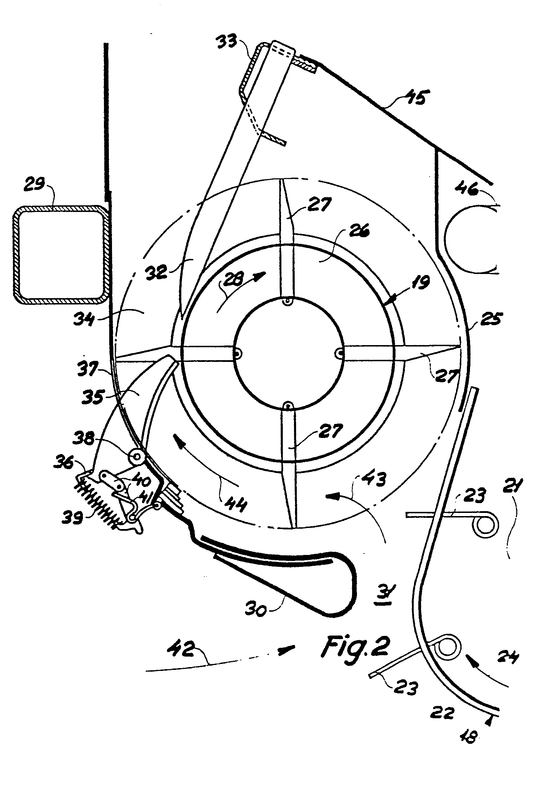

The loading vehicle shown in Fig. 1 has a box-shaped body 10 comprising a bottom 11 resting on a bogie 12 with two pairs of wheels 13, side walls 14, a front wall 14 and a rear wall 16. The front end of the vehicle mounts a pull rod 17 by means of which the vehicle may be coupled to a tractor. At 20 is indicated a transmission means for transmitting drive force from the tractor to the driven elements of the loading vehicle. A pick-up and transport mechanism, which is seen best in Fig. 2, is mounted below the front end of the vehicle and comprises a pick-up 18 and a conveyor assembly 19.

The pick-up 18 has a drum 21 which extends across the entire width of the vehicle and is rotatably journalled in a housing 22. Four rows of resilient pick-up fingers 23 are peripherally spaced on the drum, and when the drum is rotated in the direction shown by an arrow 24 the fingers 23 sweep across the surface of the ground and lift and convey straw material disposed on the ground. The fingers 23 are controlled in a conventional, not shown manner so that they extend radially out through slits in the housing 22 during the active portion of their motion, but are pivoted rearwards from the radial position at the upper portion of their path of motion where they approach the conveyor assembly 19 so that they will not hit this assembly.

The conveyor assembly 19 is mounted above and ahead of the pick-up 18 so as to pick-up the straw material lifted by the pick-up and to convey it up into the body of the vehicle. This assembly has a drum 26 which is rotatably mounted in a housing 25, said drum 26 extending across the entire width of the vehicle and carrying a plurality of peripherally spaced rows of radial conveyor arms 27. Four rows of conveyors are shown in the drawing. The drum 26 is driven in the direction shown by an arrow 28. The rows of conveyors may be disposed in axial planes; but they may also be positioned along helical lines on the drum surface, which provides for a more even distribution of the load.

The upper portion of the conveyor assembly 19 extends up through an opening at the front portion of the bottom of the vehicle, which is indicated by a frame box beam 29 in Fig. 2. The lower portion 30 of the conveyor housing 25, defining together with the pick-up housing 22 an inlet opening 31, is provided with a softly rounded edge portion. A plurality of strippers 32 are secured to a carrier beam 33 inside the vehicle, from which they extend obliquely forwards and downwards toward the drum surface to prevent the straw material from following the conveyor drum all the way round. The strippers 32 are positioned opposite the spaces between the conveyors 27 and have a width which allows the conveyors to pass unobstructedly. The front portion of the housing 25 defines together with the drum 26 and the strippers 32 a conveyor duct 34, and the front portion of housing 25 together with lower portion 30 form a guide surface which guides forward upward movement of straw material by the conveyor 27.

In the embodiment shown, the conveyor duct 34 has mounted in it a set of chopping knives 35, which are disposed opposite their respective spaces between the conveyor 27 and extend from a knife holder beam 36, provided exteriorly of the housing 25, inwards toward the conveyor drum 26 through slits 37 in the housing. Each individual knife is pivotable in its own plane about a hinge 38 formed by the engagement of two hook-like members on the knife and the beam, respectively. Each knife 35 has a pressure spring 39 which, through a toggle mechanism 40, affects the knife resiliently to assume its operating position which is shown in full lines and is determined by the abutment of the toggle on a stop means 41. If a hard object, such as a stone, is conveyed together with the straw up into the duct 34, the spring 39 will yield and allow the knife 35 to pivot to the position shown in dashed lines. The knife assembly may also be arranged so that all the knives or groups of knives pivot at the same time. The knives chop the straw with a view to subsequent ensilage.

Straw material lying on the ground, as seen in relation to the loading vehicle, is introduced into the vehicle in the direction shown by an arrow 42, and is guided to inlet opening 31 via a guide surface formed by housing. Immediately after being passed through the inlet opening 31 by the pick-up fingers 23, the material is gripped by a set of conveyors 27 conveying it in largely the opposite direction of the inlet direction, as indicated by arrows 43 and 44. This abrupt change in the direction of movement produces a damming-up effect, causing the straw material to be radially distributed over the entire conveyor front instead of accumulating, as is often the case in conventional structures, at the extremities of the conveyors, which results in a squeezing tendency between the conveyors and the housing. Further, the change in the direction of movement causes the material to be compacted more than it would otherwise be in an inlet region of the conveyor duct 34, resulting in a better utilization of the volume of the conveyor duct as well as of the body.

Having being pressed over the stripper beam 33 by the conveyors, the chopped straw material slides down a platform 45 to an intermittently operating conveyor belt 46, which is mounted on the bottom of the vehicle and transports the material stepwise rearwardly in the vehicle in a generally known manner.

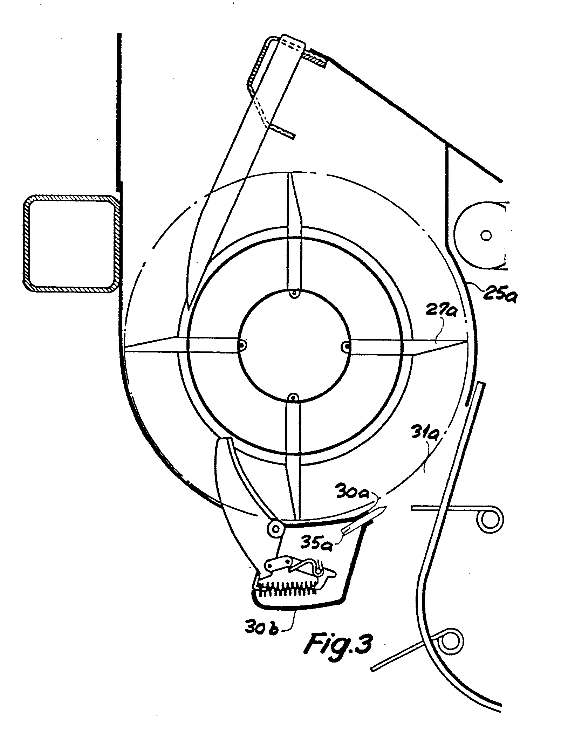

The embodiment shown in Fig. 3 of the pick-up and transport mechanism differs from that of Fig. 2 in that in the edge portion 30a of the conveyor housing 25a defining the inlet opening 31a there is mounted an additional knife 35a, which extends in the entire length of the opening and whose cutting edge faces towards the opening and in an opposite direction of the one in which the conveyors 27a pass the opening. The cutting edge of the knife 35a may be straight or serrated, and the knife contributes to the chopping of the material fed. In the structure of Fig. 3 the lower portion of the conveyor housing also has a guard plate 30b extending forwardly from the knife 35a and screening the movable knife assembly from the ground.

The reduced squeezing tendency in the structure described in the foregoing allows the conveyors to be disposed closely spaced which in turn permits a short chopped length and enables the conveyors to transport the material up into the vehicle against a great counterpressure. Thus, it has been found that the conveyors can without difficulty press straw material into a completely filled vehicle.

Fig. 4 schematically shows a two-wheel loading vehicle in which the lifting capacity of the conveyors is utilized for simplifying the means employed to carry the material rearwardly in the vehicle from the mouth of the conveyor duct. Thus, these means just comprise a rapidly rotating peg drum 47 fitted at the top in the vehicle just above the conveyor duct. As the material reaches the level of the peg drum, this drum throws it rearwards with such a great force that also the rear end of the vehicle will be completely filled. Unloading can take place by tipping the body as shown by the dashed lines.

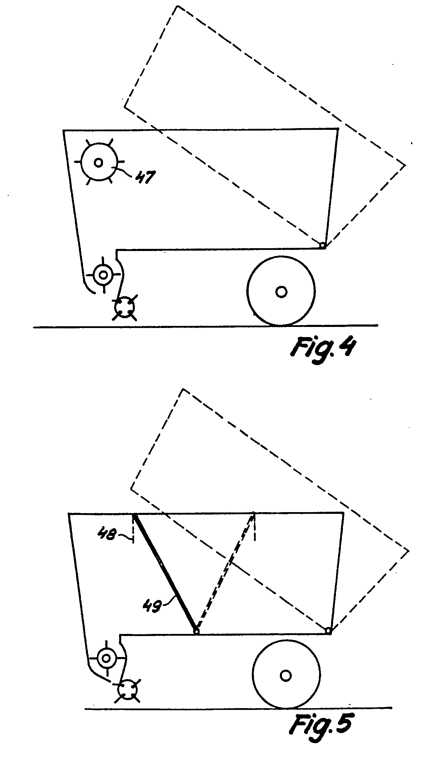

The loading vehicle shown in Fig. 5 has a scraper 48 which when being moved to and fro in horizontal grooves (not shown) along the upper edges of the sides of the vehicle directs the material rearwardly as it reaches above the lower edge of the scraper. The scraper must be suspended, in a known, not shown manner, so that it is kept substantially vertical during its rearward movement, but can pivot freely rearwards about an axis along its upper edge during its forward movement. The movement of the scraper can, e.g. as shown, be produced by a pair of drive arms 49 which are pivotally journalled at the bottom of the vehicle and connect the scraper to pin/slit connections (not shown). The drive arms can be pivoted to and fro by a hydraulic cylinder (not shown).

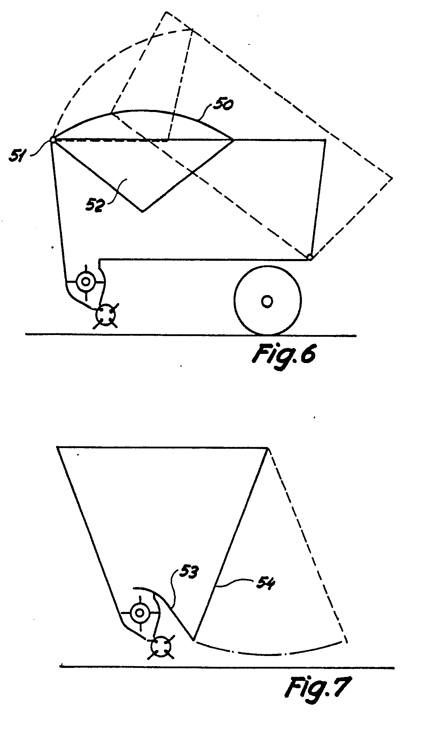

The loading vehicle shown in Fig. 6 has a curved guide plate 50 whose front edge at 51 is hinged to the upper edge of the front wall of the vehicle, from which the guide plate extends rearwards. The lateral edges of the guide plate mount two substantially triangular side plates 52 which extend downwards along the outer surface of the sides of the vehicle in the unaffected position of the guide plate, shown in Fig. 6. The guide plate and the side plates are made of a light-weight material, such as plastics. When the fed material reaches the underside of the guide plate 50, it lifts this plate and follows its curved underside and is thus guided rearwards in the vehicle.

Fig. 7 shows a substantially truncated container or body which is particularly useful on a difficult ground. The container may be arranged to be carried by a tractor or may be provided with wheels like the other ones shown.

The base 53 of the container has a steep rearward and downward inclination from the mouth of the conveyor duct to the rear wall 54 of the container hinged at its upper edge so that unloading may be effected by pivoting the rear wall backwards as shown by a dashed line.

The loading vehicle may be used to pick-up and transport straw material lying on the ground, or other crops lying on the ground such as newly mown grass or hay.

**Claims**

1. A loading vehicle for picking-up and transporting crop material lying on the ground, comprising a container body (10) for storing crop material picked-up by the vehicle, a rotary pick-up drum (18) mounted at the front end of the body (10) and having resilient pick-up fingers (23), which cooperate with a guide surface (22), for engaging crop material lying on the ground and for feeding such picked-up material at least upwardly towards a rotary conveyor drum (26) which is rotatable in the same direction as the pick-up drum (18) and which is also mounted at the front of the body (10) and has conveyor arms (27), arranged in axial or spirally extending rows on the drum (26), which convey the material fed to the conveyor drum (26) by the pick-up drum (18) via a conveyor duct (34) to the interior of the body (10), said conveyor duct being defined partly by the conveyor drum (26) and also by a first guide surface (30, 25) which cooperates with the conveyor arms (27);

characterised in that the pick-up drum (18) is mounted on the body (10) rearwardly of the conveyor drum (26) and said guide surface (22) which cooperates with the pick-up fingers (23), said guide surface (22) being referred to hereinafter as a second guide surface which is arranged to guide upward movement of the crop material to an inlet opening (31) for the conveyor drum (26);

in that the inlet opening (31) is defined between the first guide surface (30, 25) and the second guide surface (22), and is arranged below the underside of the conveyor drum (26);

and in that the first guide surface (30, 25) extends away from the inlet opening (31) so as to define a forward and upward path for the conveyor duct (34), whereby material fed to the inlet opening (31) by the pick-up drum (18) undergoes an abrupt change in direction and pre-compaction in an entry region of the conveyor duct (34), prior to passage along the conveyor duct (34) by the conveyor arms (27).

2. A loading vehicle according to claim 1, characterised in that the pick-up drum (18) is pivotally mounted below the body (10) so as to be pivotable upwardly and rearwardly when a ground obstruction is encountered.

3. A loading vehicle according to claim 1 or 2, characterised in that a knife (35a) is fitted at the inlet opening (31) to the conveyor drum (26), said knife extending along the entire length of the drum and having a cutting edge which faces in the opposite direction to the one in which the conveyors (27) pass the knife.

4. A loading vehicle according to any one of claims 1 to 3, characterised in that a rapidly rotating peg drum (47) is mounted at the top of the body (10) in the region above the conveyor drum (26), said peg drum extending substantially throughout the entire width of the vehicle.

5. A loading vehicle according to any one of claims 1 to 3, characterised that the top of the body (10) mounts a scraper (48) which extends transversely of the vehicle and substantially throughout the entire width of the vehicle and which is movable to and fro longitudinally of the vehicle, said scraper (48) being suspended so that it is retained in a substantially vertical position during its rearward movement and can pivot freely about an axis disposed in parallel with and adjacent its upper edge during its forward movement.

6. A loading vehicle according to claim 5, characterised in that shaft pins at each end of the scraper (48) engage a slit in their respective ones of two drive arms, which are parallel with each other and at the lower end are pivotally journalled adjacent the bottom of the vehicle, drive means being provided to pivot the drive arms to and fro.

7. A loading vehicle according to any one of claims 1 to 3, characterised by a curved guide plate (50) which extends substantially throughout the entire width of the vehicle and which is freely pivotable about an axis (51) extending along the front upper edge of the body (10) of the vehicle.

8. A loading vehicle according to claim 7, characterised in that a side plate (52) is secured along each side edge of the guide plate (50).

9. A loading vehicle according to any one of claims 1 to 3, characterised in that the body (10) comprises a short substantially truncated body, and the base (53) of the body is inclined downwardly and rearwardly from the rear edge of the opening through which the crop material enters the body (10) of the vehicle from the conveyor drum (26), and in that the rear wall (54) of said body is pivotable about its upper edge.

**Patentansprüche**

1. Ladewagen zum Aufnehmen und Transportieren von auf dem Boden liegendem Feldgut, mit einem Behälterkörper (10) zum Speichern des vom Fahrzeug aufgenommenen Feldgutes, einer drehbaren Aufnehmertrommel (18), die am Vorderende des Körpers (10) montiert ist und elastische Aufnehmerfinger (23) aufweist, die mit einer Leitfläche (22) zusammenwirken, um mit dem am Boden liegenden Feldgut in Eingriff zu kommen und dieses aufgenommene Gut zumindest nach oben gegen eine rotierende Fördertrommel (26) zu befördern, die in der gleichen Richtung wie die Aufnehmertrommel (18) drehbar und ebenfalls an der Vorderseite des Körpers (10) montiert ist und Förderarme (27) hat, welche in axial oder spiralförmig verlaufenden Reihen auf der Trommel (26) angeordnet sind und das der Fördertrommel (26) von der Aufnehmertrommel (18) zugeführte Gut über eine Förderleitung (34) zum Inneren des Körpers (10) fördern, wobei die Förderleitung zum Teil durch die Fördertrommel (26) und auch durch eine erste Leitfläche (30, 25) definiert ist, die mit den Förderarmen (27) zusammenwirkt;

dadurch gekennzeichnet, daß die Aufnehmertrommel (18) am Körper (10) hinter der Fördertrommel (26) und der Leitfläche (22) montiert ist, welche mit den Aufnehmerfingern (23) zusammenwirkt, wobei die Leitfläche (22), die nachfolgend als zweite Leitfläche bezeichnet wird, so angeordnet ist, daß sie die Bewegung des Feldgutes nach oben zu einer Einlaßöffnung (31) der Fördertrommel (26) leitet;

daß die Einlaßöffnung (31) zwischen der ersten Leitfläche (30, 25) und der zweiten Leitfläche (22) definiert und unterhalb der Unterseite der Fördertrommel (26) angeordnet ist;

und daß die erste Leitfläche (30, 25) sich von der Einlaßöffnung (31) weg erstreckt, um eine vordere und obere Bahn für die Förderleitung (34) zu bilden, so daß der Einlaßöffnung (31) von der Aufnehmertrommel (18) zugeführtes Gut einer abrupten Richtungsänderung und Vorkompaktierung in einem Eintrittsbereich der Förderleitung (34) unterliegt, bevor es von den Förderarmen (27) die Förderleitung (34) entlang bewegt wird.

2. Ladewagen nach Anspruch 1, dadurch gekennzeichnet, daß die Aufnehmertrommel (18) schwenkbar unterhalb des Körpers (10) so montiert ist, daß sie beim Auftreffen auf ein Bodenhinternis nach oben und hinten schwenken kann.

3. Ladewagen nach Anspruch 1 oder 2, dadurch gekennzeichnet, daß an der Einlaßöffnung (31) der Fördertrommel (26) ein Messer (35a) montiert ist, das sich über die gesamte Länge der Trommel erstreckt und eine Schneidkante hat, welche in der zur Bewegungsrichtung der Förderer (27) am Messer vorbei entgegengesetzten Richtung orientiert ist.

4. Ladewagen nach einem der Ansprüche 1 bis 3, dadurch gekennzeichnet, daß im Oberteil des Körpers (10) im Bereich oberhalb der Fördertrommel (26) eine rasch drehende Stifttrommel (47) angeordnet ist, die sich im wesentlichen über die gesamte Breite des Wagens erstreckt.

5. Ladewagen nach einem der Ansprüche 1 bis 3, dadurch gekennzeichnet, daß an der Oberseite des Körpers (10) ein Abstreicher (48) montiert ist, der sich in Querrichtung des Wagens und im wesentlichen über die gesamte Breite desselben erstreckt und in der Längsrichtung des Wagens hin- und herbewegbar ist, wobei der Abstreicher (48) ao aufgehängt ist, daß er während seiner Bewegung nach hinten in einer im wesentlichen vertikalen Stellung gehalten ist, und während seiner Bewegung nach vorne um eine Achse frei schwenken kann, die parallel und benachbart zu seiner Oberkante angeordnet ist.

6. Ladewagen nach Anspruch 5, dadurch gekennzeichnet, daß an jedem Ende des Abtreichers (48) angeordnete Achszapfen in einen Schlitz in einem von zwei zugeordneten Antriebsarmen eingreifen, die parallel zueinander verlaufen und am unteren Ende nahe dem Boden des Fahrzeuges schwenkbar gelagert sind, wobei Antriebsmittel vorgesehen sind, um die Antriebsarme hin und her zu schwenken.

7. Ladewagen nach einem der Ansprüche 1 bis 3, dadurch gekennzeichnet, daß eine gekrümmte Leitplatte (50) vorgesehen ist, die sich im wesentlichen über die gesamte Breite des Wagens erstreckt und die um eine Achse (51) frei schwenkbar ist, welche sich entlang dervorderen Oberkante des Körpers (10) des Wagens.erstreckt.

8. Ladewagen nach Anspruch 7, dadurch gekennzeichnet, daß entlang jeder Seitenkante der Leitplatte (50) eine Seitenplatte (52) befestigt ist.

9. Ladewagen nach einem der Ansprüche 1 bis 3, dadurch gekennzeichnet, daß der Körper (10) als kurzer, im wesentlichen verjüngter Körper ausgebildet ist und daß die Basis (53) des Körpers von der Hinterkante der Öffnung, über welche das Feldgut in den Körper (10) des Wagens von der Fördertrommel (26) her eintritt, nach unten und hinten geneigt ist, wobei die hintere Wand (54) des Körpers um ihre Oberkante schwenkbar ist.

## Revendications

1. Remorque autochargeuse pour le ramassage et le transport des récoltes se trouvant sur le sol, comprenant un caisson conteneur (10) pour stocker le récolte ramassée par le véhicule, un tambour rotatif de ramassage (18) monté à l'extrémité antérieure du caisson (10) et muni de doigts élastiques de ramassage (23) qui coopèrent avec une surface de guidage (22), pour venir au contact de la récolte reposant sur le sol et pour acheminer cette récolte ramassée, au moins vers le haut en direction d'un tambour rotatif de convoyage (26) qui peut tourner dans la même direction que le tambour de ramassage (18), qui est également monté à l'avant du caisson (10) et présente des bras convoyeurs (27) agencés en des rangées s'étendant axialement ou spiroïdalement sur le tambour (26), qui convoient la matière délivrée au tambour de convoyage (26) par le tambour de ramassage (18), par l'intermédiaire d'un canal de convoyage (34), jusqu'à l'intérieur du caisson (10), ledit canal de convoyage étant délimité en partie par le tambour de convoyage (26), ainsi que par une première surface de guidage (30, 25) coopérant avec les bras convoyeurs (27);

caractérisée par le fait que le tambour de ramassage (18) est monté sur le caisson (10) à l'arrière du tambour de convoyage (26) et de ladite surface de guidage (22) coopérant avec les doigts de ramassage (23), ladite surface de guidage (22) étant qualifiée ci-après de "seconde surface de guidage" qui est destinée à guider le mouvement ascendant de la récolte vers une ouverture d'admission (31) pour le tambour de convoyage (26);

par le fait que l'ouverture d'admission (31) est délimitée entre la première surface de guidage (30, 25) et la seconde surface de guidage (22), et est disposée au-dessous de la face inférieure du tambour de convoyage (26);

et par le fait que la première surface de guidage (30, 25) s'étend à l'écart de l'ouverture d'admission (31) de manière à délimiter un trajet vers l'avant et vers la haut pour le canal de convoyage (34), de sorte que la récolte délivrée à l'ouverture d'admission (31) par le tambour de ramassage (18) subit un brusque changement de direction et un compactage prèalable dans une zone d'entrée du canal de convoyage (34), avant d'être acheminée le long du canal de convoyage (34) par les bras convoyeurs (27).

2. Remorque autochargeuse selon la revendication 1, caractérisée par le fait que le tambour de ramassage (18) est monté pivotant au-dessous du caisson (10), de manière à pouvoir pivoter vers le haut et vers l'arrière lorsqu'il rencontre un obstacle sur le sol.

3. Remorque autochargeuse selon la revendication 1 ou 2, caractérisée par le fait qu'un couteau (35a) est implanté sur l'ouverture d'admission (31) vers le tambour de convoyage (26), ledit couteau s'étendant sur toute la longueur du tambour, et présentant une arête tranchante orientée dans la direction opposée à celle dans laquelle les convoyeurs (27) franchissent le couteau.

4. Remorque autochargeuse selon l'une quelconque des revendications 1 à 3, caractérisée par le fait qu'un tambour (47) à pointes tournant rapidement est monté au sommet du caisson (10), dans la région surplombant le tambour de convoyage (26), ledit tambour à pointes couvrant sensiblement toute la largeur du véhicule.

5. Remorque autochargeuse selon l'une quelconque des revendications 1 à 3, caractérisée par le fait que le sommet du caisson (10) assure le montage d'une raclette (48) qui s'étend dans le sens transversal du véhicule en couvrant sensiblement toute la largeur de ce véhicule et est animée d'un mouvement alternatif dans le sens longitudinal du véhicule, ladite raclette (48) étant suspendue de telle sorte qu'elle soit retenue dans une position sensiblement verticale lors de son mouvement vers l'arrière et puisse, lors de son mouvement vers l'avant, pivoter librement autour d'un axe parallèle et adjacent à son arête supérieure.

6. Remorque autochargeuse selon la revendication 5, caractérisée par le fait que des tourillons situés à chaque extrémité de la raclette (48) pénètrant dans une fente ménagée dans les uns respectifs de leurs deux bras d'entraînement, qui sont mutuellement parallèles et tourillonnent à pivotement par leur extrémité inférieure à proximité du fond du véhicule, un moyen d'entraînement état prévu pour imprimer un pivotement alternatif aux bras d'entraînement.

7. Remorque autochargeuse selon l'une quelconque des revendications 1 à 3, caractérisée par une plaque curviligne de guidage (50) qui couvre sensiblement toute la largeur du véhicule, et qui peut pivoter librement autour d'un axe (51) s'étendant le long de l'arête antérieure supérieure du caisson (10) du véhicule.

8. Remorque autochargeuse selon la revendication 7, caractérisée par le fait qu'une plaque latérale (52) est fixée le long de chaque arête latérale de la plaque de guidage (50).

9. Remorque autochargeuse selon l'une quelconque des revendications 1 à 3, caractérisée par le fait que le caisson (10) comprend un caisson court sensiblement tronconique, la base (53) de ce caisson étant inclinée vers le bas et vers l'arrière à partir de l'arête postérieure de l'ouverture par l'intermédiaire de laquelle la récolte pénètre dans le caisson (10) du véhicule en provenance du tambour de convoyage (26); et par le fait que la paroi postérieure (54) dudit caisson peut pivoter autour de son arête supérieure.

*Fig.1*

0 074 172

Fig.2

Fig.3

Fig.4

Fig.5

Fig.6

Fig.7